Europäisches Patentamt

European Patent Office

Office européen des brevets

(19)

(11) **EP 1 198 073 A2**

(12) **EUROPÄISCHE PATENTANMELDUNG**

(43) Veröffentlichungstag:
**17.04.2002   Patentblatt 2002/16**

(51) Int Cl.⁷: **H04B 1/707**

(21) Anmeldenummer: **01124447.2**

(22) Anmeldetag: **11.10.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **11.10.2000  DE 10050341**

(71) Anmelder: **FRAUNHOFER-GESELLSCHAFT ZUR
FÖRDERUNG DER
ANGEWANDTEN FORSCHUNG E.V.
80636 München (DE)**

(72) Erfinder: **Klinski, Robert
80804 München (DE)**

(74) Vertreter: **Schoppe, Fritz, Dipl.-Ing.
Schoppe, Zimmermann & Stöckeler
Patentanwälte
Postfach 71 08 67
81458 München (DE)**

(54) **Vorrichtung und Verfahren zum Schätzen eines Kanals zwischen einem Sender und einem
Empfänger**

(57)      Bei einem Verfahren zum Schätzen eines unbekannten Kanals (12) mit einem Sender (10) und einem Empfänger wird eine Nachricht über den Kanal (12) gesendet. Hierauf wird unter Verwendung eines bekannten Verfahrens eine Kanalgrobabschätzung (14) durchgeführt, um eine grobe Kanalschätzung (x) zu erhalten. Nach einer Berechnung (16) der inversen Autokorrelationsmatrix der groben Kanalschätzung wird die Autokorrelierte ($r_{yy}$) des Kanals unter Verwendung der bekannten Signalleistung der gesendeten Nachricht ermittelt, um dann ein Grob-Fein-Transformationsfilter durch Multiplizieren der konjugiert Komplexen der Autokorrelierten des Kanals mit der inversen Autokorrelierten der groben Kanalabschätzung berechnet (24). Die grobe Kanalschätzung wird mit dem Grob-Fein-Transformationsfilter gefiltert (26), um eine Feinabschätzung des Kanals zu erhalten. Das erfindungsgemäße Verfahren erlaubt aufgrund seiner starken Konvergenz die Verwendung von kurzen Referenzfolgen und somit eine sichere und genaue Kanalabschätzung bei zeitlich stark veränderlichen Übertragungskanälen, wie sie im Mobilfunk typisch sind.

FIG. 1

EP 1 198 073 A2

**Beschreibung**

Die vorliegende Erfindung bezieht sich auf die Datenübertragung und insbesondere auf die Datenübertragung über einen veränderlichen Kanal, welcher abgeschätzt werden muß.

Damit eine Datenübertragung und insbesondere eine digitale Datenübertragung bei zeitlich veränderlichen Kanaleigenschaften gewährleistet werden kann, muß die Kanalimpulsantwort, also das Ergebnis einer inversen Fourier-Transformation der Kanalübertragungsfunktion, zu jedem Zeitpunkt bekannt sein. Dies gilt um so mehr für den Vorgang des Aufbaus einer Verbindung zwischen einem Sender und einem Empfänger über den Kanal.

Dies bedeutet jedoch, daß die Kanalimpulsantwort laufend geschätzt werden muß. Üblicherweise werden zur Kanalschätzung vereinbarte Referenzfolgen verwendet. In jüngster Zeit werden auch referenzfolgenfreie Schätzverfahren zur Kanal-identifikation eingesetzt. Hierzu wird auf Robert Klinski, "Blind System Identification and Equalization for OFDM-Systems", Alcatel Workshop on Equalization, Antwerpen, November 1999 verwiesen.

Bei der Schätzung des üblicherweise komplexen Kanals werden zum einen der Betrags-Frequenzgang und zum anderen der Phasen-Frequenzgang geschätzt. Zum Schätzen des Betrags-Frequenzgangs und des Phasen-Frequenzgangs eines üblicherweise komplexen Kanals sind verschiedene Vorrichtungen und Verfahren bekannt. Hierzu wird beispielsweise auf Simon Haykin, "Adaptive Filter Theory", Prentice-Hall 1996 verwiesen.

Lediglich beispielhaft wird nachfolgend auf den sogenannten MMSE-Ansatz als Repräsentant für ein bekannten Kanalschätzverfahren eingegangen (MMSE = Minimum Mean Squared Error Estimation = Schätzung nach der Methode des minimalen mittleren quadratischen Fehlers) eingegangen. Alternativ kann jedoch auch eine sog. Least-Squares-Schätzung eingesetzt werden.

Im MMSE-Ansatz wird zur Kanalschätzung eine typischerweise bekannte Referenzfolge eingesetzt. Diese Referenzfolge wird über einen unbekannten Kanal h übertragen. Der Empfänger empfängt dann eine Empfangsfolge, die im Falle eines idealen Kanals unmittelbar der Sende-Referenzfolge entsprechen würde. Aufgrund zeitlich veränderlicher und räumlich veränderlicher Kanäle, wie sie insbesondere bei der digitalen Funkübertragung auftreten, ist jedoch der Kanal sehr stark verzerrend, so daß ein korrekter Empfang bei begrenzter Sendeleistung nur dann gewährleistet werden kann, wenn der Kanal abgeschätzt werden kann, um die Empfangsfolge entzerren zu können, was üblicherweise mittels eines Equalizers erreicht wird. Durch die Kanalschätzung wird somit der Betrags- und der Phasenfrequenzgang des Kanals abgeschätzt, um den Equalizer derart ansteuern zu können, daß die Verzerrungen des Kanals kompensiert werden.

Weist ein Kanal beispielsweise eine Amplitudenverzerrung in Form einer konstanten Dämpfung mit dem Faktor 1/2 auf, so würde durch eine Kanalschätzung dieser Faktor 1/2 ermittelt werden, um einen Equalizer mit dem Inversen dieses Faktors, also mit dem Faktor 2 ansteuern zu können. Würde beispielsweise festgestellt werden, daß der Kanal bei niedrigen Frequenzen nicht dämpft, jedoch bei hohen Frequenzen um einen bestimmten Faktor dämpft, so würde dieser Frequenzgang des Kanals mittels einer Kanalschätzung festgestellt werden können, um den Equalizer derart ansteuern zu können, daß er bei niedrigen Frequenzen nichts tut, jedoch bei hohen Frequenzen invers zum Dämpfungsfaktor des Equalizers verzerrt. Liegt ein phasenverzerrender Kanal vor, so wird eine Kanalschätzung den Phasenfrequenzgang des Kanals ermitteln, derart, daß ein Equalizer mit dem Inversen dieses Phasenfrequenzgangs angesteuert werden kann, um die Verzerrung des Kanals rückgängig zu machen.

Würde keine Kanalschätzung eingesetzt werden, so könnte ein guter Empfang beispielsweise mit einer Bitfehlerrate unterhalb einer bestimmten Schwelle nur noch bei einem sehr hohen Signal/Rausch-Verhältnis sichergestellt werden, was entweder einer hohen Sendeleistung entspricht, oder einer relativ niedrigen Nutzdatenrate.

Gleichung 1 zeigt den systemtheoretischen Zusammenhang zwischen der bekannten Eingangsfolge x und der bekannten Ausgangsfolge y, wobei h die Kanalimpulsantwort darstellt. Die Ausgangsfolge y ergibt sich als Faltung der Kanalimpulsantwort mit der Eingangsfolge. Die Kanalimpulsantwort kann dann folgendermaßen durch Umstellung der Systemgleichung berechnet werden:

$$y = h \otimes x;$$
$$\Rightarrow$$
$$h = r_{yx}^{\bullet} \cdot \left[ R_{xx} \right]^{-1}; \qquad (Gl.1)$$

Das umkreiste Kreuz stellt in Gleichung 1 die Faltungsoperation dar. $r_{yx}^{*}$ ist die konjungierte Kreuzkorrelierte zwischen der Ausgangsfolge y und der Eingangsfolge x. $R_{xx}$ ist die Autokorrelationsmatrix der bekannten Eingangsfolge x.

Bei der MMSE-Schätzung sind folgende Randbedingungen zu beachten:

(a)     Um die gewünschte Kanalimpulsantwort h zu bestimmen, muß die Eingangsfolge x empfangsseitig bekannt sein.

(b)     Der Schätzfehler wird um so kleiner, je länger die Referenzfolge x ist.

Insbesondere die Bedingung (b) bringt folgende Probleme mit sich:

(a)     Mit steigender Länge der Referenzfolge sinkt die effektive Bandbreite der Übertragung.

(b)     Die Inversion der Autokorrelationsmatrix, welche aufgrund von Gleichung 1 nötig ist, ist bei langen Referenzfolgen problematisch.

Anders ausgedrückt stellt sich bei jeder Kanalschätzung einerseits die Frage, wann die Kanalimpulsantwort ausreichend genau geschätzt ist, d. h. war die Eingangsfolge x lang genug ist. Andererseits besteht die Frage, wie die bereits vorhandene Schätzung verbessert werden kann, ohne daß während einer digitalen Übertragung dauernd eine sehr lange bekannte Eingangsreferenzfolge gesendet werden muß, welche wertvolle Bits für die Nutzdatenübertragung in Anspruch nimmt.

Insbesondere bei stark zeitvarianten Kanälen, wie sie z. B. im Mobilfunk auftreten, kommt noch ein weiteres Problem hinzu. Selbst wenn die Nutzdatenbandbreite, also das Verhältnis der Menge der Nutzdaten zu der Menge der bekannten Referenz-daten kein Problem ist, dürfen dennoch nur sehr kurze Referenzfolgen eingesetzt werden, um die momentanen Kanaleigenschaften des sich stark verändernden Kanals bestimmen zu können. Dies kann man sich anhand eines fahrenden Autos vorstellen, in dem jemand ein Mobilfunkgerät bedient. Der Übertragungskanal zwischen diesem Mobilfunkgerät und einer Basisstation ändert sich insbesondere dann sehr stark, wenn das Auto in Bewegung ist und an hohen und niedrigen Häusern bzw. Bäumen vorbeifährt und insbesondere z. B. eine Brücke unterqueren muß. Hierbei wird sich der Kanal zeitlich sehr schnell und sehr nachhaltig ändern, so daß der Einsatz von langen Referenzfolgen nur begrenzt sinnvoll ist, da das MMSE-Verfahren zwar eine sehr genaue Kanalschätzung erlaubt, sich der Kanal jedoch in der Zeit, in der die genaue Kanalschätzung berechnet worden ist, wieder verändert hat, so daß keinerlei Nutzen verbleibt.

Somit kann zusammengefaßt werden, daß insbesondere bei stark zeitvarianten Kanälen, jedoch auch bei nicht so stark zeitvarianten Kanälen, bei denen eine maximale Übertragungsrate erforderlich ist, unbedingt kurze Referenzfolgen eingesetzt werden müssen, um die momentanen Kanaleigenschaften möglichst genau und schnell bestimmen zu können bzw. um eine hohe Nutzdatenrate sicherzustellen und wenig Sendebits für Referenzfolgen "verschwenden" zu müssen.

Dies bedeutet jedoch andererseits auch, daß die Schätzung notwendigerweise mit einem Schätzfehler behaftet ist, welcher üblicherweise unbekannt und aufgrund kurzer Referenzfolgen relativ groß ist.

Die WO 00/48332 offenbart eine MMSE-basierte Kanalschätzeinrichtung in einem mobilen Kommunikationssystem. Die Kanalschätzeinrichtung verwendet ein zweistufiges Verfahren zur Kanalschätzung, wobei zunächst eine Kanalschätzung mit Hilfe von bekannten Symbolen durchgeführt wird. Die Werte dieser Kanalschätzung werden dann in einem Filter gefiltert, so daß eine verfeinerte Kanalschätzung entsteht. Das Filter wird durch die Multiplikation der Kreuzkovarianz des Kanals und der ersten Kanalschätzung mit der Inversen der Kreuzkovarianz der ersten Kanalschätzung berechnet.

Die Aufgabe der vorliegenden Erfindung besteht darin, ein schnelles und weniger aufwendiges Konzept zum Schätzen eines Kanals zwischen einem Sender und einem Empfänger sowie einen schnellen und Bandbreiten-sparenden Empfänger zu schaffen.

Diese Aufgabe wird durch ein Verfahren zum Schätzen eines Kanals nach Patentanspruch 1, durch eine Vorrichtung zum Schätzen eines Kanals nach Patentanspruch 10 sowie durch einen Empfänger nach Patentanspruch 11 gelöst.

Der vorliegenden Erfindung liegt die Erkenntnis zugrunde, daß von der einstufigen bekannten Kanalschätzung weggegangen werden muß, um trotz kurzer Referenzfolgen eine möglichst genaue Kanalschätzung zu erreichen. Erfindungsgemäß wird mittels irgendeines bekannten Kanalschätzverfahrens eine Grobkanalschätzung mit einer vorzugsweise kurzen Referenzfolge durchgeführt. Das Ergebnis dieser Grobkanalschätzung wird wiederum als Eingangsfolge in ein "Übertragungsfilter" aufgefaßt, das die Grobkanalschätzung in eine Feinkanalschätzung transformiert. Anders ausgedrückt wird erfindungsgemäß davon ausgegangen, daß, wie es in Gleichung 1 festgehalten worden ist, bei einer gegebenen Eingangsfolge x und einer gegebenen Ausgangsfolge y stets ein Filter bestimmbar ist, das x auf y abbildet. Voraussetzung hierfür ist lediglich, daß die Inverse der Autokorrelationsmatrix der Eingangsfolge existiert, d. h. $R_{xx}$ ist nicht singulär.

Wird angenommen, daß x die fehlerbehaftete Schätzung der wahren Kanalimpulsantwort y ist, so läßt sich unter der gerade erwähnten Voraussetzung stets ein Filter h bestimmen, mit dem die ungenaue Schätzung oder Kanalgrobschätzung x auf y abgebildet werden kann. Da jedoch dieses Grob-Fein-Transformationsfilter eigentlich nur dann bestimmt werden kann, wenn y, also die wahre Kanalimpulsantwort, bekannt ist (bzw. die Kreuzkorrelierte $r_{yx}$), bekannt ist, muß eine weitere Annahme getroffen werden. Diese Annahme basiert darauf, daß die Schätzung x bereits in der Nähe der wahren Größe y liegt. Unter dieser Voraussetzung kann die unbekannte Kreuzkorrelierte $r_{yx}^*$ durch die Autokorrelierte der wahren Kanalimpulsantwort $r_{yy}^*$ ersetzt werden. Diese Autokorrelierte $r_{yy}^*$ der Kanalimpulsantwort kann unabhängig von dem zur Grobkanalschätzung herangezogenen Verfahren bestimmt werden.

Die Grundlage hierfür bietet die Tatsache, daß der Betrags-frequenzgang des Kanals unabhängig von der Referenzdatenfolge geschätzt werden kann, und zwar um so besser, je mehr die Varianz, d. h. die Signalleistung, des gesendeten Signals bekannt ist. Insbesondere bei digitalen Übertragungskanälen ist die Signalleistung des gesendeten Signals bekannt, selbst wenn das gesendete Signal an sich nicht bekannt ist. In diesem Zusammenhang sei insbesondere darauf hingewiesen, daß übliche Sendeverfahren bzw. Modulationsverfahren immer zum Ziel haben, daß die Sendeleistung unabhängig von den Nutzdaten möglichst konstant ist, um die Sendeverstärker immer im Bereich des optimalen Wirkungsgrads betreiben zu können, und um Nebenkanalaussendungen aufgrund nicht-linearer Sendeverstärker möglichst gering zu halten.

Anders ausgedrückt besteht bei jedem Sender die Bestrebung, unabhängig von der Bedeutung der gesendeten Daten eine konstante Sendeleistung zu haben, welche insbesondere immer möglichst im optimalen Wirkungsgradbereich des Verstärkers liegt und somit unmittelbar auch bekannt ist. Die Voraussetzung für die vorliegende Erfindung, nämlich daß die Signalleistung des gesendeten Signals bekannt sein muß, stellt somit für moderne Sende/ Empfangs-Verfahren insbesondere digitaler Natur keine Einschränkung dar, da diese Voraussetzung ohnehin immer erfüllt ist bzw. die Bestrebung besteht, daß diese Voraussetzung möglichst gut erfüllt wird.

Es sei jedoch darauf hingewiesen, daß bei sogenannten Blind-Schätzverfahren nicht einmal die Leistung des Sendesignals benötigt wird. In diesem Fall ergibt sich für die Autokorrelierte des Kanals ein Ergebnis, das mit der unbekannten Signalleistung skaliert ist. Durch Skalierung dieses Ausdrucks auf eine Konstante kann die Abhängigkeit von der Sendeleistung bei der Kanalgrobabschätzung eliminiert werden. Ist die Leistung des Sendesignals jedoch bekannt, so wird die Kanalgrobabschätzung besser sein. Die hohe Konvergenz des erfindungsgemäßen Verfahrens erlaubt jedoch auch weiter entfernte Kanalgrobabschätzungen, so daß die Sendeleistung der über den Kanal gesendeten Nachricht nicht zwingend bekannt sein muß.

Wenn die Kreuzkorrelierte $r_{yx}^*$ zwischen der Kanalimpulsantwort und der Kanalgrobschätzung durch die Autokorrelierte der wahren Kanalimpulsanwort $r_{yy}^*$ ersetzt wird, wird ein Fehler eingeführt, der um so kleiner ist, je näher die Kanalgrobabschätzung bereits an der wahren Größe y liegt. Es sei jedoch darauf hingewiesen, daß das erfindungsgemäße Verfahren auch dort gut konvergiert, wenn die Kanalgrobabschätzung noch relativ weit entfernt von der wahren Größe liegt, so daß deutlich kürzere Referenzfolgen eingesetzt werden können, als sie bei einer einstufigen Kanalschätzung erforderlich wären, um die gleiche Schätzgenauigkeit zu erhalten.

Das Grob-Fein-Transformationsfilter, durch das die Kanalgrobabschätzung in die Kanalfeinabschätzung transformiert wird, wird durch Multiplizieren der konjugiert komplexen Autokorrelationsfunktion der Kanalimpulsantwort und der Autokorrelationsmatrix $R_{xx}$ der Kanalgrobabschätzung, welche vor der Multiplikation noch invertiert werden muß, bestimmt. Die Feinabschätzung für den Kanal y ergibt sich dann durch Falten der Impulsantwort des Grob-Fein-Transformationsfilters mit der Kanalgrobabschätzung. Auf der Basis der dadurch gewonnenen Daten kann dann ein Equalizer angesteuert werden, um den unbekannten Kanal zu entzerren.

Das erfindungsgemäße Konzept erlaubt eine Verbesserung der Schätzgenauigkeit auf der Grundlage einer zusätzlichen Schätzung der Kanal-Autokorrelierten. Ein Vorteil des erfindungsgemäßen Konzepts ist, daß es relativ gering rechenaufwendig ist, da das Grob-Fein-Transformationsfilter nur einige wenige Koeffizienten haben kann, so daß eine äußerst effiziente und damit schnelle Berechnung der Koeffizienten des Grob-Fein-Transformationsfilters möglich ist, was insbesondere dann von wesentlicher Bedeutung ist, wenn eine schnelle Verarbeitung erforderlich ist, die in Verbindung mit kurzen Referenzfolgen für die Abschätzung von sich zeitlich stark verändernden Kanälen nötig ist.

Bevorzugte Ausführungsbeispiele der vorliegenden Erfindung werden nachfolgend bezugnehmend auf die beiliegenden Zeichnungen detailliert erläutert. Es zeigen:

Fig. 1     eine Vorrichtung zum Schätzen eines Kanals gemäß einem ersten Ausführungsbeispiel der vorliegenden Erfindung;

Fig. 2     eine Vorrichtung zum Schätzen eines Kanals gemäß einem zweiten Ausführungsbeispiel der vorliegenden Erfindung;

Fig. 3     eine Vorrichtung zum Schätzen eines Kanals gemäß einem dritten Ausführungsbeispiel der vorliegenden Erfindung;

Fig. 4     ein Simulationsergebnis zum Vergleichen des erfindungsgemäßen Konzepts mit einem Standardverfahren bezüglich des Imaginärteils der Kanalimpulsantwort; und

Fig. 5    ein Simulationsergebnis zum Vergleich des erfindungsgemäßen Konzepts mit einem Standardverfahren bezüglich des Realteils der Kanalimpulsantwort.

Bevor auf konkrete Ausführungsbeispiele des erfindungsgemäßen Konzepts eingegangen wird, wird eine systemtheoretische Herleitung des zweistufigen Abschätzungsverfahrens gemäß der vorliegenden Erfindung gegeben. Wie es bereits ausgeführt worden ist, läßt sich bei einer gegebenen Eingangsfolge x und bei einer gegebenen Ausgangsfolge y stets ein Filter bestimmen, das x auf y abbildet. Dieses Filter wird allgemein als h bezeichnet. Voraussetzung hierfür ist, daß die Inverse der Autokorrelationsmatrix der Eingangsfolge x existiert, d. h. daß $R_{xx}$, also die Autokorrelationsmatrix der Folge x, nicht singulär ist.

Aus dieser Sichtweise heraus wird jedoch erfindungsgemäß eine andere Interpretation gegeben. Wird angenommen, daß x die fehlerbehaftete Schätzung der wahren Kanalimpulsantwort y ist, so läßt sich unter der genannten Voraussetzung stets ein sogenanntes Grob-Fein-Transformationsfilter h bestimmen, mit dem die ungenaue Schätzung x auf die wahre Kanalimpulsantwort y abgebildet werden kann. Das Hauptproblem besteht jedoch darin, daß ein solches Filter nur dann bestimmt werden kann, wenn y bekannt ist, bzw. wenn die Kreuzkorrelierte $r_{yx}*$ bekannt ist. Dies ist jedoch im allgemeinen nicht der Fall.

Unter der Annahme, daß die Schätzung x bereits in der Nähe der wahren Größe y liegt, kann jedoch für die Kreuzkorrelierte $r_{yx}*$ eine Näherung gefunden werden, mit deren Hilfe eine ausreichend genaue Schätzung des Transformationsfilters h bestimmt werden kann.

Die Schätzgröße x läßt sich stets als eine Überlagerung des wahren Werts y mit einem Fehlerterm $\varepsilon$ darstellen:

$$x=y+\varepsilon, \ |\varepsilon|<<|x|, \ |\varepsilon|<<|y|. \tag{Gl.2}$$

Für die Kreuzkorrelierte $r_{yx}*$ folgt damit:

$$r_{yx}^* = r_{y(y+\varepsilon)}^* = r_{yy}^* + r_{y\varepsilon}^* \approx r_{yy}^* \tag{Gl.3}$$

Die in Gleichung 2 und Gleichung 3 gegebenen Zusammenhänge sind allgemein bekannt, so daß auf dieser Stelle auf einen mathematischen Beweis verzichtet werden kann.

Gleichung 3 schafft eine Möglichkeit, um die Kreuzkorrelierte $R_{yx}*$ durch die Autokorrelierte der wahren Kanalimpulsantwort, also $r_{yy}*$, zu ersetzen. Die Bestimmungsgleichung für das Grob-Fein-Transformationsfilter h lautet somit:

$$h \approx r_{yy}^* \cdot \left[R_{xx}\right]^{-1}. \tag{Gl. 4}$$

Im Gegensatz zu $r_{yx}*$ läßt sich die Autokorrelierte $r_{yy}*$ der Kanalimpulsantwort im Falle digitaler Übertragung unabhängig von dem zur Kanalschätzung herangezogenen Verfahren bestimmen. Die Grundlage hierfür bietet die Tatsache, daß der Betragsfrequenzgang des Kanals unabhängig von der Referenzdatenfolge geschätzt werden kann, unter der Voraussetzung, daß die Varianz, d. h. die Signalleistung, des gesendeten Signals bekannt ist.

Die Schätzung des Betragsfrequenzgangs des Kanals unabhängig von der Referenzdatenfolge kann beispielsweise durchgeführt werden, wie es in K. D. Kammeyer, K. Kroschel, "Digitale Signalverarbeitung: Filterung und Spektralanalyse", Teubner-Verlag, 1998, beschrieben ist. Andere bekannte Verfahren zum Schätzen des Betragsfrequenzgangs des Kanals unabhängig von der Referenzdatenfolge können jedoch selbstverständlich ebenfalls eingesetzt werden.

Im Frequenzbereich kann dieser Zusammenhang folgendermaßen ausgedrückt werden:

$$S_y(f)=\sigma_x^2 \cdot |Y(f)|^2. \tag{Gl.5}$$

In Gleichung 5 bedeutet Sy die spektrale Leistung jedes Ausgangsprozesses, während $\sigma_x^2$ die spektrale Leistungsdichte des Eingangsprozesses darstellt. Mit $|Y(f)|$ ist der Betrags-frequenzgang des Kanals gekennzeichnet. $|Y(f)|^2$ wird durch die Fourier-Transformation der konjugiert komplexen Autokorrelierten $r_{yy}*$ der Kanalimpulsantwort erhalten.

Im folgenden wird angenommen, daß $\sigma_x^2$ bekannt ist. Im Falle digitaler Übertragung kann diese Annahme immer erfüllt werden. Für eine nicht so genaue, jedoch ebenfalls in vielen Fällen zufriedenstellende Kanalschätzung reicht es jedoch aus, wenn die spektrale Leistungsdichte des Eingangsprozesses lediglich näherungsweise bzw. innerhalb eines Fehlerkorridors, bekannt ist. Dann wird durch das zweistufige erfindungsgemäße Konzept noch eine Verbesserung gegenüber eine normalen Kanalschätzung bei gleicher Referenzdatenfolge erhalten, wobei jedoch die besten Ergebnisse erzielt werden, wenn die spektrale Leistungsdichte der Eingangsdatenfolge möglichst genau bekannt ist.

Die Schätzung des Betragsfrequenzgangs bzw. der spektralen Leistungsdichte bzw. der Kanalautokorrelierten kann somit mit einem der bereits erwähnten Standardverfahren zur Kanalschätzung erreicht werden.

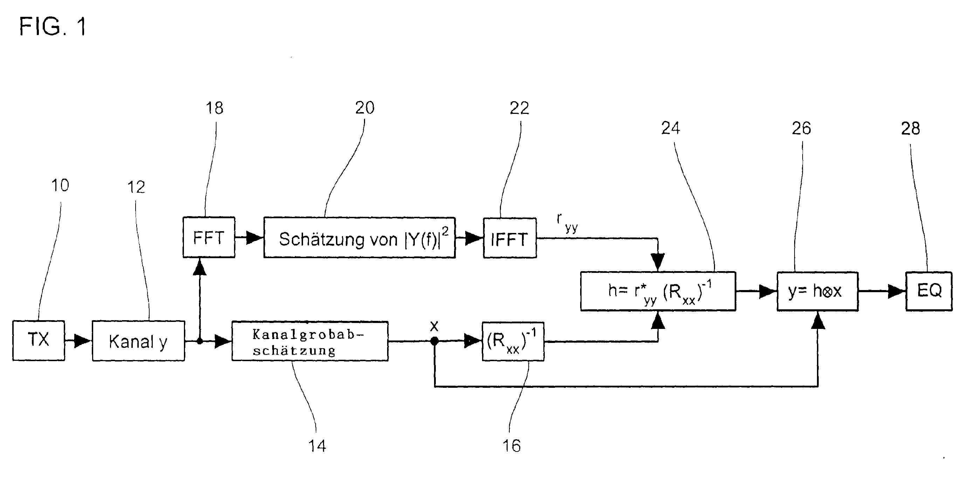

Im nachfolgenden wird auf Fig. 1 eingegangen, welche eine erfindungsgemäße Vorrichtung zum Schätzen eines Kanals zeigt. Diese Vorrichtung setzt sich zusammen aus einem Sender 10 der mit TX bezeichnet ist. Dieser Sender 10 sendet eine Nachricht über einen Kanal y, der mit dem Bezugszeichen 12 gekennzeichnet ist. Die empfängerseitigen Ausgangsdaten des Kanals werden mittels einer Einrichtung 14 zur Grobkanalschätzung empfangen, um unter Verwendung der Eingangsdatenfolge, welche der Einrichtung 14 zur Kanalschätzung bekannt ist, eine Kanalgrobabschätzung durchzuführen. Es sei darauf hingewiesen, daß es nicht zwingend ist, daß eine bekannte Referenzdatenfolge verwendet wird, sondern daß auch auf der Basis einer unbekannten gesendeten Nachricht eine Kanalgrobabschätzung durchgeführt werden kann, wie es bereits zu Eingang dargelegt worden ist. Die Kanalgrobabschätzung x wird einer Einrichtung 16 zugeführt, die die Inverse der Autokorrelationsmatrix $R_{xx}$ der Kanalgrobabschätzung liefert. Parallel dazu werden die Ausgangsdaten des Kanals y einer Fourier-Transformation mittels einer Transformationseinrichtung 18 unterzogen, welche auf beliebige Art und Weise ausgeführt werden kann und die Zeitbereichsdaten lediglich in eine spektrale Darstellung derselben umsetzt. Mittels einer Einrichtung 20 wird die spektrale Leistungsdichte des Kanals mit Hilfe eines Standardverfahrens, wie z. B. des Least-Squares-Verfahrens, geschätzt. Das Ergebnis wird mittels einer Einrichtung zum Umsetzen in eine zeitliche Darstellung, welche mit IFFT 22 bezeichnet ist, wieder in den Zeitbereich transformiert, um die Autokorrelierte $R_{yy}$ des Kanals zu erhalten. Damit kann, nachdem die konjugiert Komplexe der Autokorrelationsfunktion erhalten worden ist, das Grob-Fein-Transformationsfilter h berechnet werden (24), um dann die Kanalgrobabschätzung x mit dem Grob-Fein-Transformationsfilter h zu filtern (26), so daß sich ein genauerer Schätzwert, d. h. ein Feinschätzwert, der wahren Kanalübertragungsfunktion y ergibt. Mit diesen Daten kann dann ein Equalizer 28 auf bekannte Art und Weise angesteuert werden, um die Kanalverzerrung zu kompensieren.

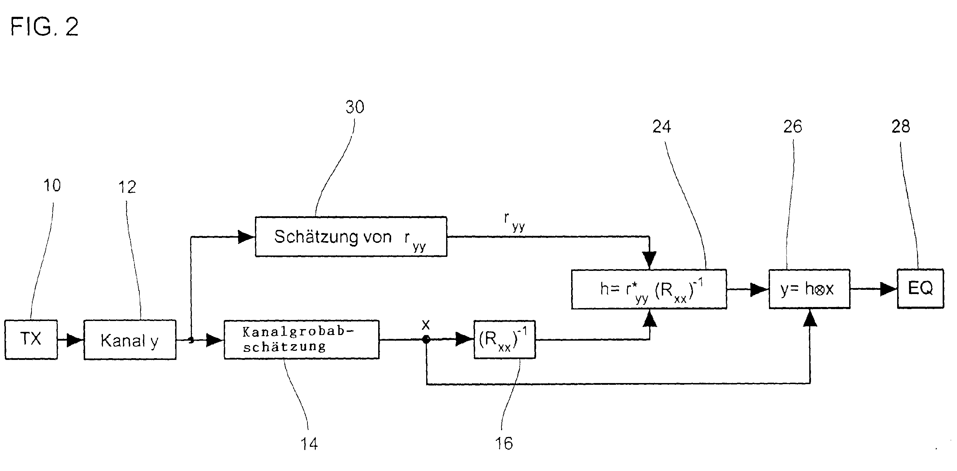

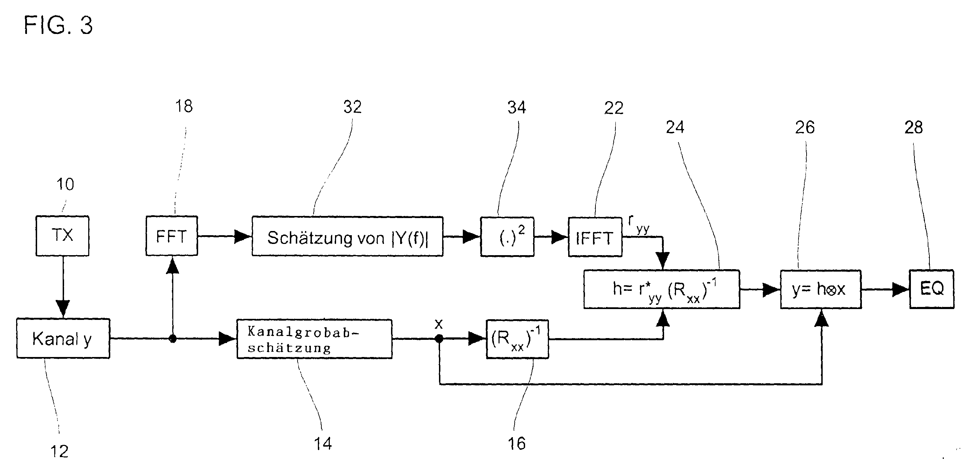

Die in den Fig. 2 und 3 gezeigten alternativen Ausführungsbeispiele der vorliegenden Erfindung unterscheiden sich lediglich darin, wie die Autokorrelierte $r_{yy}$ des Kanals unter Verwendung der bekannten Signalleistung der vom Sender Tx abgegebenen Sendefolge erhalten wird. Während in Fig. 1 mittels der Einrichtung 20 die spektrale Leistungsdichte des Kanals geschätzt worden ist, und vorher eine Fourier-Transformation und nachher eine inverse Fourier-Transformation durchgeführt werden, wird bei dem in Fig. 2 gezeigten Ausführungsbeispiel die Auto-Korrelierte $r_{yy}$ des Kanals unmittelbar abgeschätzt.

Bei dem in Fig. 3 gezeigten Ausführungsbeispiel der vorliegenden Erfindung wird hingegen ebenfalls wie bei dem in Fig. 1 gezeigten ersten Ausführungsbeispiel der vorliegenden Erfindung eine schnelle Fourier-Transformation 18 und eine inverse schnelle Fourier-Transformation 22 durchgeführt, wobei jedoch die spektrale Leistungsdichte des Kanals mittels eines zweistufigen Verfahrens gewonnen wird, nämlich zunächst mit einer Schätzung des Betrags der Kanalübertragungsfunktion mittels einer Einrichtung 32 und einer anschließenden Quadrierereinrichtung 34.

Weitere Arten und Weisen zur Ermittlung der Auto-Korrelierten $r_{yy}$ des Kanals können eingesetzt werden. Es sei darauf hingewiesen, daß die Auswahl zwischen den drei in den Fig. 1 bis 3 gezeigten Alternativen z. B. abhängig davon getroffen werden kann, ob die eine oder die andere Berechnungseinrichtung ohnehin bereits im Empfänger vorhanden ist, die dann mehrfach verwendet werden kann. Ansonsten führen alle drei Ausführungsbeispiele zum selben Ergebnis.

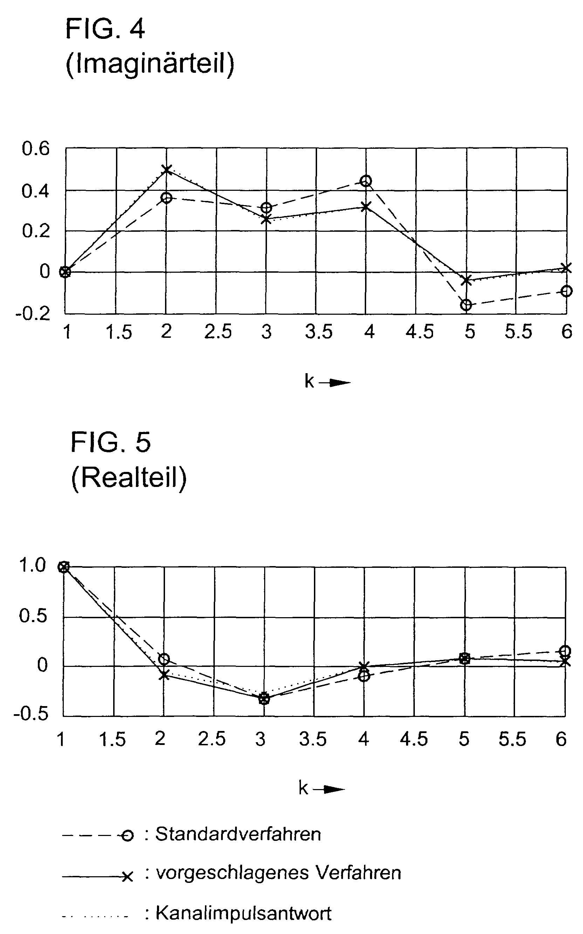

Zur Verifikation des erfindungsgemäßen Verfahrens wird nachfolgend auf die Fig. 4 und 5 eingegangen. Die Fig. 4 und 5 zeigen den Vergleich zwischen einem Standard-Schätzverfahren, dessen Ergebnisse mit einem Kreis gezeichnet sind, und dem erfindungsgemäßen Verfahren, dessen Ergebnisse mit einem Kreuz gekennzeichnet sind, und der wahren Kanalimpulsantwort, die in den Fig. 4 und 5 durchgezogen gezeichnet ist. Fig. 4 stellt insbesondere den Imaginärteil der Kanalimpulsantwort dar, während Fig. 5 den Realteil veranschaulicht.

Entlang der Abszisse ist in Fig. 4 ein der Zeit entsprechender Faktor k eingetragen, während entlang der Ordinate die normierte Größe der Imaginärteils (Fig. 4) bzw. des Realteils (Fig. 5) dargestellt ist. Insbesondere bei der Simulation des Imaginärteils, der in Fig. 4 gezeigt ist, sind die doch teilweise erheblichen Abweichungen zwischen dem Standardverfahren und der wahren Kanalimpulsantwort zu sehen, während das erfindungsgemäße zweistufige Verfahren, das neben einer Kanalgrobabschätzung auch ein Grob-Fein-Transformationsfilter umfaßt, eine Abweichung zwischen dem abgeschätzten Wert und dem wahren Wert nahezu nicht mehr feststellbar ist. Insbesondere anhand von Fig. 4 ist die gute Konvergenz des erfindungsgemäßen Verfahrens erkennbar, da bereits bei relativ schlechten Grobabschätzungswerten eine Konvergenz des Verfahrens festzustellen ist, was in anderen Worten ausgeführt bedeutet, daß die in den Gleichungen 2 und 3 dargestellte Näherung nicht besonders gut erfüllt werden muß.

Das erfindungsgemäße Konzept ist somit sehr robust und insbesondere für kurze Referenzfolgen geeignet. Des weiteren sei darauf hingewiesen, daß das Grob-Fein-Transformationsfilter nur einige wenige Koeffizienten hat. Bei der in den Fig. 4 und 5 gezeigten Simulation wurden nur drei Koeffizienten des Grob-Fein-Transformationsfilters h bestimmt. Diese Tatsache erlaubt eine effiziente Berechnung der Koeffizienten des Transformationsfilters.

Das erfindungsgemäße Konzept erlaubt eine wesentliche Verbesserung der Schätzgenauigkeit, unabhängig davon, mit welchem Verfahren eine Kanalgrobabschätzung durchgeführt worden ist. Das erfindungsgemäße Konzept kann für eine Vielzahl von Modulationsverfahren eingesetzt werden, von denen lediglich beispielhaft die PAM, die PSK, die QAM oder die DMT genannt sind.

Schließlich sei darauf hingewiesen, daß, wie es bereits aus den Fig. 1 bis 3 zu sehen ist, das erfindungsgemäße Konzept ohne weiteres in einen bekannten standardgemäß ausgeführten Empfänger eingebaut werden kann, welcher entsprechend den Fig. 1 bis 3 aufgebaut ist, wenn der Sender 10 und der Kanal 12 weggelassen werden.

**Patentansprüche**

1. Verfahren zum Schätzen eines Kanals (12) zwischen einem Sender (10) und einem Empfänger, mit folgenden Schritten:

   Senden (10) einer Nachricht über den Kanal (12);

   Durchführen (14) einer Kanalgrobabschätzung, um eine grobe Kanalschätzung (x) zu erhalten;

   Bilden (16) der inversen Autokorrelationsmatrix ($R_{xx}{}^{-1}$) der groben Kanalschätzung (x);

   Ermitteln (18, 20, 22; 30; 18, 32, 34, 22) der Autokorrelierten ($r_{yy}$) des Kanals unter Verwendung der gesendeten Nachricht;

   Berechnen (24) eines Grob-Fein-Transformationsfilters (h) durch Multiplizieren der konjugiert Komplexen der Autokorrelierten ($r_{yy}$) des Kanals (y) mit der inversen Autokorrelationsmatrix ($R_{xx}{}^{-1}$) der groben Kanalschätzung; und

   Filtern (26) der groben Kanalschätzung (x) mit dem Grob-Fein-Transformationsfilter (h), um eine Feinabschätzung des Kanals (y) zu erhalten.

2. Verfahren nach Anspruch 1,

   bei dem im Schritt des Sendens einer Nachricht eine bekannte Nachricht oder eine Nachricht, von der zumindest die Signalleistung bekannt ist, gesendet wird; und

   bei dem im Schritt des Durchführens einer Kanalgrobabschätzung ein Ausgangssignal des Kanals als Reaktion auf die gesendete Nachricht ermittelt wird, und der Kanal unter Verwendung der bekannten Nachricht oder der bekannten Signalleistung und des Ausgangssignals des Kanals grob geschätzt wird.

3. Verfahren nach Anspruch 1, bei dem der Schritt des Durchführens einer Kanalgrobabschätzung (14) durch ein referenzfolgenfreies Schätzverfahren durchgeführt wird.

4. Verfahren nach einem der vorhergehenden Ansprüche,

   bei dem der Schritt des Ermittelns der Autokorrelierten ($r_{yy}$) des Kanals folgende Schritte aufweist:

   Transformieren (18) eines Ausgangssignals des Kanals in den Frequenzbereich;

   Schätzen (20) der spektralen Leistungsdichte des Kanals; und

   Rücktransformieren (22) der geschätzten spektralen Leistungsdichte in den Zeitbereich, um die Autokorrelierte ($r_{yy}$) des Kanals zu erhalten.

5. Verfahren nach einem der Ansprüche 1 bis 3, bei dem der Schritt des Ermittelns der Autokorrelierten ($r_{yy}$) des Kanals folgende Schritte aufweist:

Transformieren (18) eines Ausgangssignals des Kanals in den Frequenzbereich;

Schätzen (32) des Betrags der Kanalübertragungsfunktion;

Quadrieren (34) des geschätzten Betrags der Kanalübertragungsfunktion; und

Rücktransformieren des quadrierten geschätzten Betrags der Kanalübertragungsfunktion in den Zeitbereich, um die Autokorrelierte ($r_{yy}$) des Kanals (y) zu erhalten.

6. Verfahren nach einem der vorhergehenden Ansprüche, bei dem im Schritt des Sendens eine digitale Nachricht gesendet wird.

7. Verfahren nach einem der vorhergehenden Ansprüche, bei dem im Schritt des Ermittelns der Autokorrelierten ($r_{yy}$) des Kanals (y) ein MMSE-Verfahren verwendet wird.

8. Verfahren nach einem der vorhergehenden Ansprüche, bei das Grob-Fein-Transformationsfilter (h) weniger als sechs und vorzugsweise lediglich drei Filterkoeffizienten hat.

9. Verfahren nach einem der vorhergehenden Ansprüche, bei dem die gesendete Nachricht PAM-, PSK-, QAM- oder DMT- moduliert ist.

10. Vorrichtung zum Schätzen eines Kanals (12) zwischen einem Sender (10) und einem Empfänger, mit folgenden Merkmalen:

einer Einrichtung zum Senden (10) einer Nachricht über den Kanal (12);

einer Einrichtung zum Durchführen (14) einer Kanalgrobabschätzung, um eine grobe Kanalschätzung (x) zu erhalten;

einer Einrichtung zum Bilden (16) der inversen Autokorrelationsmatrix ($R_{xx}^{-1}$) der groben Kanalschätzung (x);

einer Einrichtung zum Ermitteln (18, 20, 22; 30; 18, 32, 34, 22) der Autokorrelierten ($r_{yy}$) des Kanals unter Verwendung der gesendeten Nachricht;

einer Einrichtung zum Berechnen (24) eines Grob-Fein-Transformationsfilters (h) durch Multiplizieren der konjugiert Komplexen der Autokorrelierten des Kanals (y) mit der inversen Autokorrelationsmatrix ($R_{xx}^{-1}$) der groben Kanalschätzung; und

einer Einrichtung zum Filtern (26) der groben Kanalschätzung (x) mit dem Grob-Fein-Transformationsfilter (h), um eine Feinabschätzung des Kanals (y) zu erhalten.

11. Empfänger mit folgenden Merkmalen:

einer Einrichtung zum Empfangen einer Nachricht;

einer Einrichtung zum Schätzen eines Kanals (12) zwischen einem Sender (10) und dem Empfänger, mit folgenden Merkmalen:

einer Einrichtung zum Durchführen (14) einer Kanalgrobabschätzung, um eine grobe Kanalschätzung (x) zu erhalten;

einer Einrichtung zum Bilden (16) der inversen Autokorrelationsmatrix ($R_{xx}^{-1}$) der groben Kanalschätzung (x);

einer Einrichtung zum Ermitteln (18, 20, 22; 30; 18, 32, 34, 22) der Autokorrelierten ($r_{yy}$) des Kanals unter Verwendung der von der Einrichtung zum Empfangen empfangenen Nachricht;

einer Einrichtung zum Berechnen (24) eines Grob-Fein-Transformationsfilters (h) durch Multiplizieren der konjugiert Komplexen der Autokorrelierten des Kanals (y) mit der inversen Autokorrelationsmatrix ($R_{xx}^{-1}$) der groben Kanalschätzung; und

einer Einrichtung zum Filtern (26) der groben Kanalschätzung (x) mit dem Grob-Fein-Transformationsfilter (h), um eine Feinabschätzung des Kanals (y) zu erhalten.

12. Empfänger nach Anspruch 11, der ferner folgendes Merkmal aufweist:

einen Entzerrer (28), der mit der Feinabschätzung des Kanals (y) angesteuert wird, um durch den Kanal bewirkte Verzerrungen zumindest teilweise zu kompensieren.

FIG. 1

FIG. 2

EP 1 198 073 A2

FIG. 3

## FIG. 4
## (Imaginärteil)

$k \longrightarrow$

## FIG. 5
## (Realteil)

$k \longrightarrow$

– – – ⊙ : Standardverfahren

———× : vorgeschlagenes Verfahren

········ : Kanalimpulsantwort